# FASCICULE DE BREVET EUROPEEN

(11) **EP 1 532 407 B1**
(45) Date de publication et mention de la délivrance du brevet: **27.09.2006**
(21) Numéro de dépôt: 03787834.5
(22) Date de dépôt: 06.06.2003
(51) Int. Cl.: F24H 1/43, F24H 1/16, F28D 7/02

(54) **ECHANGEUR DE CHALEUR A CONDENSATION A DOUBLE FAISCEAU DE TUBES**
WÄRMETAUSCHER FÜR EIN BRENNWERTGERÄT MIT DOPPELROHRBÜNDEL
CONDENSING HEAT EXCHANGER WITH DOUBLE BUNDLE OF TUBES

(30) Priorité: 30.07.2002 FR 0209647
(43) Date de publication de la demande: 25.05.2005
(73) Titulaire: Le Mer, Joseph Marie, 29600 Morlaix (FR)
(72) Inventeur: LE MER, Joseph, 29600 Morlaix (FR); GIANNONI, Rocco, 20121 Milan (IT)
(74) Mandataire: Le Faou, Daniel
(86) Numéro de dépôt international: PCT/FR2003/001698
(87) Numéro de publication internationale: WO 2004/016995

(56) Documents cités:
- EP-A- 0 078 207
- WO-A-94/16272
- US-A- 5 687 678

## Description

Cet échangeur est destiné notamment à équiper une chaudière à gaz pour des applications domestiques, en vue d'alimenter un circuit de chauffage central et/ou de fournir de l'eau à usage sanitaire.

L'échangeur de chaleur qui fait l'objet de l'invention, plus précisément, est un double échangeur, constitué d'un échangeur principal, directement exposé aux gaz chauds générés par le brûleur à gaz, et d'un échangeur secondaire, qui est exposé aux gaz, de température nettement plus faible, qui s'échappent hors de l'échangeur principal.

L'eau, ou tout autre fluide à réchauffer, circule dans cet échangeur double à contre courant des fumées, c'est-à-dire en passant d'abord dans l'échangeur secondaire, où il subit un préchauffage, puis dans l'échangeur primaire, où il subit le chauffage proprement dit.

A titre indicatif, les gaz brûlés directement issus du brûleur se trouvent à une température de l'ordre de 1000°C.

Après avoir traversé l'échangeur principal, leur température est généralement comprise entre 100 et 180°C.

Ces gaz chauds contiennent une certaine quantité d'eau sous forme de vapeurs qui sont susceptibles de se condenser lorsqu'ils viennent lécher la paroi de l'échangeur secondaire, dès lors que celle-ci se trouve en dessous de la température de rosée, de l'ordre de 60°C.

Cette condensation a pour effet de fournir des calories supplémentaires à l'eau circulant dans l'échangeur secondaire, ces calories supplémentaires correspondant à la chaleur latente de vaporisation.

Un échangeur double de ce type, qui est décrit par exemple dans le document EP 0 078 207, permet d'améliorer sensiblement le rendement de l'appareil.

Dans le document WO 94/16272 est décrit un élément échangeur de chaleur qui consiste en un tube en matériau thermiquement bon conducteur, dans lequel un fluide caloporteur, par exemple de l'eau à réchauffer, est destiné à circuler.

Ce tube est enroulé en hélice et possède une section droite aplatie et ovale dont le grand axe est sensiblement perpendiculaire à l'axe de l'hélice, et chaque spire du tube possède des faces planes qui sont écartées des faces de la spire adjacente d'un interstice de hauteur constante, cette hauteur étant sensiblement plus faible que l'épaisseur de ladite section droite, l'espacement entre deux spires voisines étant en outre calibré au moyen d'entretoises, celles-ci étant constituées par des bossages formés dans la paroi du tube.

Ce document décrit également des échangeurs de chaleur comportant plusieurs éléments tels que ci-dessus, qui sont agencés de différentes manières dans les divers modes de réalisation exposés.

Un élément échangeur ainsi conçu assure un échange de chaleur très important entre les gaz chauds qui lèchent l'élément tubulaire et le fluide à réchauffer qui circule à l'intérieur de celui-ci.

En effet, lors de son passage à travers l'interstice entre les spires, le flux de gaz chauds est en contact avec une surface relativement étendue de la paroi de l'élément d'échangeur.

La présente invention a plus particulièrement pour objet de proposer un échangeur de chaleur à condensation, du type général exposé ci-dessus, dont les éléments d'échange de la chaleur sont des faisceaux de tubes plats tels que ceux connus par le WO 94/16272, auquel on pourra se reporter au besoin.

L'état de la technique le plus proche de l'objet de la présente invention correspond au mode de réalisation illustré à la figure 22 du document précité.

L'appareil en question est composé de deux faisceaux parallèles de tubes, l'un primaire référencé 1, et l'autre, secondaire référencé 1'.

Ces deux faisceaux sont disposés à proximité l'un de l'autre, avec leurs axes parallèles, et sont montés fixement à l'intérieur d'une enveloppe 8 (désignée « corps » dans le document).

Les gaz chauds sont fournis par un appareil extérieur 9 et pénètrent, via un conduit 90 et une manchette 80 dans la partie centrale de l'échangeur principal 1 (flèches **J**_{**0**}). Les gaz chauds traversent ce dernier radialement, de l'intérieur vers l'extérieur (flèches **J**_{**1**}) puis traversent l'échangeur secondaire, toujours radialement, mais cette fois de l'extérieur vers l'intérieur (flèches **J**_{**2**}).

Enfin, les gaz refroidis quittent ce double échangeur par une manchette 81 (flèches **J**_{**3**}**).**

L'objectif de l'invention est d'améliorer l'appareil très schématiquement représenté sur la figure 22 du WO 94/16272, pour en accroître la compacité.

En effet, une contrainte souvent rencontrée par les installateurs de ce genre d'appareil est liée à l'espace disponible pour le recevoir, qui est souvent réduit.

L'invention a également pour objectif de proposer un appareil relativement léger, de manière à rendre plus commode les opérations de transport, de mise en place et de fixation in situ par l'installateur.

L'invention découle de la constatation faite par l'inventeur que l'énergie à récupérer dans l'échangeur secondaire est toujours plus faible que celle qui est captée par l'échangeur primaire.

Partant de cette constatation, on peut en déduire que la surface d'échange thermique de l'échangeur secondaire, qui est proportionnelle à la longueur du faisceau tubulaire, peut être réduite par rapport à celle de l'échangeur primaire.

Ainsi, si on réduit la dimension axiale du faisceau secondaire, on ménage dans le prolongement de ce dernier, à l'une de ses extrémités, un espace disponible que l'on va mettre à profit pour y installer la manchette d'évacuation des gaz brûlés et refroidis.

L'encombrement en direction axiale de cette manchette ne s'ajoute donc pas à celui de l'appareil proprement dit, contrairement à la réalisation connue de la figure 22 du WO 94/16272 ; il s'inscrit dans celui de l'appareil.

De plus, la longueur de tube de l'échangeur secondaire étant réduite, l'appareil est naturellement plus léger qu'un appareil qui aurait des enroulements primaires et secondaires de même longueur, comme dans l'appareil connu précité.

Enfin, toujours dans un but d'amélioration de la compacité, il est fait usage, conformément à l'invention, d'un brûleur cylindrique qui est logé à l'intérieur même du faisceau primaire.

Ainsi, la dimension axiale du brûleur se trouve également inscrite dans la dimension axiale de l'enveloppe.

L'objet de l'invention est par conséquent un échangeur de chaleur à condensation associé à un brûleur à gaz ou à fioul qui est composé de deux faisceaux disposés à proximité l'un de l'autre et montés fixement à l'intérieur d'une enveloppe imperméable aux gaz, ces deux faisceaux communiquant l'un avec l'autre par l'intermédiaire d'un collecteur dit « de transfert », des moyens étant prévus pour faire circuler un fluide à réchauffer, en particulier de l'eau froide, tout d'abord à l'intérieur de(s) tube(s) constitutif(s) dudit faisceau secondaire, puis - via ledit collecteur de transfert - à l'intérieur de(s) tube(s) constitutif(s) dudit faisceau primaire, ladite enveloppe entourant les deux faisceaux de tubes, tout en étant faiblement espacée de chacun d'eux, cette enveloppe présentant une manchette d'évacuation des gaz brûlés qui est positionnée au voisinage dudit faisceau secondaire, cet échangeur étant ainsi agencé que les gaz chauds générés par le brûleur traversent radialement, ou approximativement radialement, en passant à travers les interstices séparant leurs spires, tout d'abord ledit faisceau primaire, puis ledit faisceau secondaire, et sont ensuite évacués hors de l'échangeur à travers ladite manchette.

Conformément à l'invention :
- le brûleur est un brûleur cylindrique, dont le diamètre est sensiblement inférieur à celui du faisceau primaire, qui est logé coaxialement à l'intérieur de ce dernier, en s'étendant axialement sur toute, ou pratiquement toute, sa longueur ;
- la dimension axiale du faisceau secondaire est sensiblement inférieure à celle du faisceau primaire, de sorte qu'est ménagé un espace disponible en regard d'une portion d'extrémité du faisceau primaire, dans le prolongement du faisceau secondaire de plus petite longueur ;
- cet espace disponible est occupé par une enceinte qui communique avec l'espace intérieur du faisceau secondaire ;
- la manchette est raccordée à la paroi de l'enceinte de manière à communiquer avec elle, et est orientée transversalement par rapport à l'axe du faisceau secondaire, de sorte que son encombrement en direction axiale s'inscrit dans celui de l'enceinte.

Par ailleurs, selon un certain nombre de caractéristiques additionnelles possibles de l'invention :
- les tubes constitutifs de chaque faisceau possèdent chacun des portions d'extrémité rectilignes, les axes de ces deux portions d'extrémité étant situées dans un plan commun qui est tangent à l'hélice formée par le faisceau, leurs ouvertures étant tournées vers l'extérieur de l'échangeur, de chaque côté de celui-ci, et les portions d'extrémité du faisceau primaire sont situées à proximité du faisceau secondaire, et réciproquement, tandis que lesdites portions d'extrémité présentent des embouchures cylindriques traversant fixement et de manière étanche la paroi de l'enveloppe et pénétrant, sur un côté de celle-ci, dans un collecteur dit « d'entrée-sortie » cloisonné, apte à être raccordé à un conduit d'amenée du fluide à réchauffer et à un conduit d'évacuation du fluide réchauffé, et sur son autre côté, dans le collecteur de transfert ;
- l'enveloppe comprend, d'une part, un tronçon de tube à fine paroi, de section droite constante, le contour de cette section, approximativement ovale, étant composé de deux parties d'extrémité en forme de demi-cercle reliées par des segments rectilignes latéraux et, d'autre part, une paire de plaques de fermeture, ou « façades », dont les contours correspondent à celui de ladite section, et qui s'étendent perpendiculairement à l'axe dudit tronçon de tube, et en obturent chacune l'une des deux embouchures, chaque portion semi cylindrique du tronçon de tube entourant coaxialement et partiellement (sur un demi-tour) l'un desdits faisceaux ;
- l'une de ces façades, désignée « façade avant », présente une ouverture apte à recevoir une porte supportant le brûleur tout en en autorisant le démontage ;
- cette porte supporte également, du côté extérieur, un ventilateur, ou une simple manchette, permettant d'alimenter le brûleur en mélange gazeux combustible ;
- en vis-à-vis de l'espace intérieur au faisceau primaire, chacune des deux façades est munie d'un disque thermiquement isolant ;
- les deux faisceaux ont le même diamètre ;
- les deux faisceaux ont des axes horizontaux et parallèles ;
- les deux faisceaux sont placés au dessus l'un de l'autre, leurs axes étant situés dans un même plan vertical ;
- le faisceau secondaire est placé au-dessus du faisceau primaire, des moyens tels qu'une goulotte inclinée intercalée entre les deux faisceaux étant prévus pour empêcher que les condensats susceptibles de se former sur le faisceau secondaire ne retombent sur le faisceau primaire et/ou sur le brûleur ;
- les deux faisceaux sont placés l'un à côté de l'autre, leurs axes étant situés dans un même plan horizontal ;
- l'axe de ladite manchette d'évacuation est compris dans le plan contenant les axes des deux faisceaux ;
- l'axe de ladite manchette d'évacuation est perpendiculaire au plan contenant les axes des deux faisceaux ;
- la paroi de ladite enceinte est un manchon tubulaire cylindrique, coaxial au faisceau secondaire, dont l'un des bords d'extrémité est fixé contre l'enveloppe de l'échangeur, tandis que son autre bord d'extrémité est muni d'une collerette annulaire contre laquelle prend appui le faisceau secondaire, ladite manchette d'évacuation, également de forme cylindrique, se raccordant audit manchon, perpendiculairement à son axe ;
- l'enveloppe possède un fond incliné doté d'une bouche de sortie, adapté pour collecter et évacuer les condensats susceptibles de se former sur le faisceau secondaire.

D'autres caractéristiques et avantages de l'invention apparaîtront de la description et des dessins annexés qui en représentent, à simple titre d'exemples non limitatifs des modes de réalisation possibles.

Sur ces dessins :
- la figure 1 est une vue de face schématique d'un premier mode de réalisation de l'invention, coupé par le plan vertical référencé I-I sur la figure 2 ;
- la figure 2 est une vue de gauche schématique de l'appareil de la figure 1 ;
- les figures 3 et 4 sont des vues simplifiées, et à plus petite échelle, des figures 1 et 2 respectivement, ces vues étant destinées à en illustrer le fonctionnement, et en particulier le cheminement des gaz ;
- les figures 5 à 8 sont des vues analogues aux figures 1 à 4 respectivement, représentant un second mode de réalisation possible d'un échangeur conforme à l'invention ;
- enfin, les figures 9 et 10 sont des schémas représentant une variante de l'appareil respectivement vu de côté et de face en coupe.

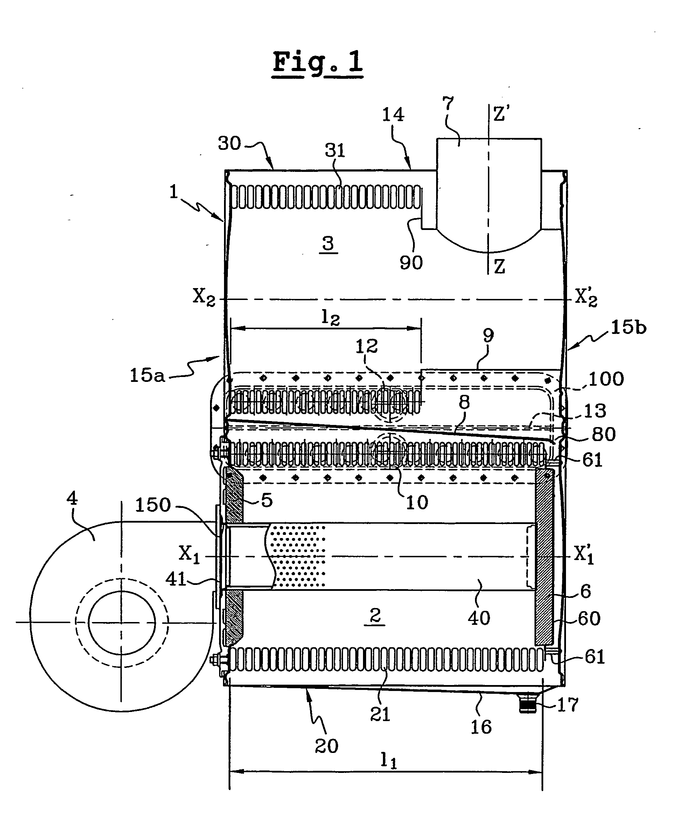

L'appareil illustré sur les figures 1 à 4 comporte un corps creux à mince paroi, ou enveloppe, référencée 1, par exemple en tôle d'acier inoxydable.

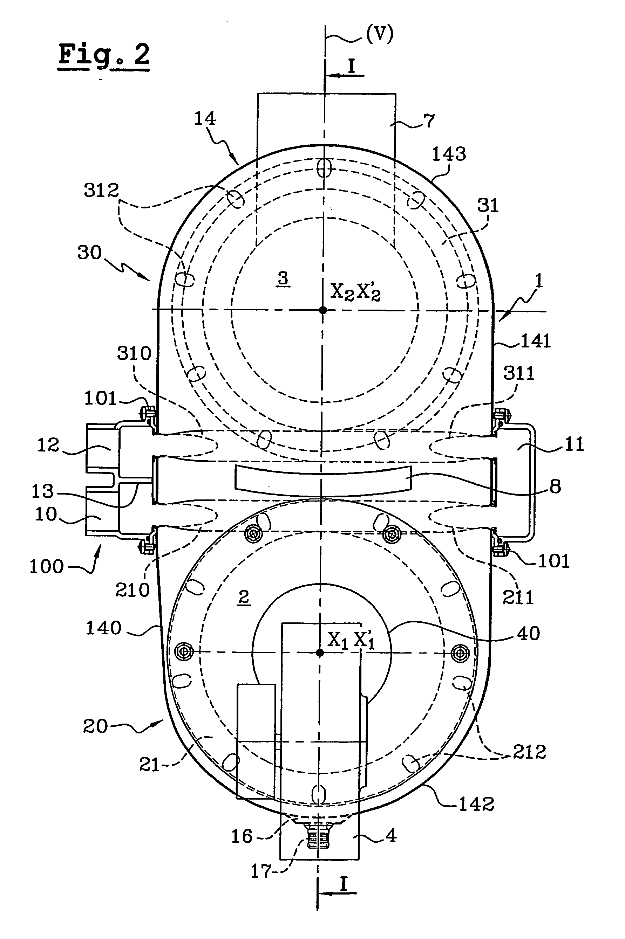

Comme on le voit sur la figure 2, vu de côté, le corps 1 a une forme ovale dont le contour est formé en parties haute et basse de demi-cercles, lesquels sont raccordés par deux segments rectilignes latéraux.

L'enveloppe est constituée d'un tronçon de tube 14 ayant la forme ovale précitée, dont les portions basse et haute en demi-cercle ont été désignés par les références 142, 143 sur la figure 2, tandis que les parties latérales planes ont été désignées 140 et 141, ce tronçon de tube étant obturé à chacune de ses extrémités par des couvercles ou « façades » de même contour, référencés 15a et 15b sur la figure 1.

Dans la suite de la présente description, on désignera par « façade avant » la façade 15a qui se trouve sur la gauche de la figure 1 et par « façade arrière » la façade opposée 15b.

Les deux façades 15a et 15b sont fixées à la partie centrale tubulaire 14 de manière étanche aux gaz, par tout moyen approprié connu, par exemple par soudage.

Comme on le voit sur la figure 1, le fond 16 de l'enveloppe est incliné en direction d'une bouche de sortie 17, dont la fonction sera expliquée plus loin.

A l'intérieur de cette enveloppe 1 sont montées deux faisceaux à tubes aplatis, du genre décrit dans la demande internationale précitée, chacun de ces faisceaux constituant l'élément d'échange thermique d'un échangeur primaire 20 et d'un échangeur secondaire 30.

Le faisceau primaire est référencé 21, tandis que le faisceau secondaire est référencé 31.

Chacun de ces deux faisceaux est constitué d'un ensemble d'éléments tubulaires juxtaposés, coaxiaux, d'axe horizontal désigné **X**_{**1**}**X'**_{**1**} pour l'échangeur primaire 20 et **X**_{**2**}**X'**_{**2**} pour l'échangeur secondaire 30.

Ces deux axes horizontaux se trouvent dans le même plan vertical désigné V sur la figure 2, le faisceau secondaire 31 surplombant le faisceau primaire 21.

Les espaces intérieurs des faisceaux 21 et 31 ont été désignés respectivement 2 et 3.

A l'échangeur primaire 20 est associé un brûleur à gaz ou fioul 40. Il s'agit d'un brûleur tubulaire cylindrique, qui présente sur toute sa longueur une pluralité de petits trous dirigés radialement, permettant le passage d'un mélange gazeux combustible, par exemple air + butane ou air + fioul, la surface extérieure de la paroi tubulaire constituant la surface de combustion.

Dans les exemples illustrés, le mélange gazeux combustible est amené à l'appareil au moyen d'un ventilateur de type connu, qui fait également partie de l'appareil.

Toutefois, il ne sortirait pas du cadre de l'invention en substituant à ce ventilateur une manchette d'amenée du mélange, par des moyens séparés (de type connu). Le ventilateur étant ainsi déporté de l'axe de l'échangeur principal **X**_{**1**}**X'**_{**1**}**.**

Le brûleur 40 a un diamètre notablement plus petit que celui du faisceau 21 à l'intérieur duquel il est monté coaxialement, c'est-à-dire suivant l'axe **X**_{**1**}**X'**_{**1**}.

La façade avant 15a présente une ouverture circulaire 150, centrée sur cet axe **X**_{**1**}**X'**_{**1**}**,** qui permet l'introduction et la mise en place du brûleur à l'intérieur de l'enveloppe.

A la sortie du ventilateur 4 est prévue une platine de montage 41, permettant la fixation de l'ensemble contre la façade avant 15a, par exemple au moyen de vis non représentées.

Cet agencement permet un démontage facile du brûleur, notamment en vue de son nettoyage, pour la maintenance et l'entretien de l'échangeur.

En regard de l'espace 2, chacune des façades 15a et 15b est garnie intérieurement d'un disque isolant 5, respectivement 6, par exemple en matériau à base de céramique.

Ces éléments ont pour fonction de protéger à ce niveau les parois de l'enveloppe 1 de la très forte chaleur générée par la combustion.

La fixation des disques 5, 6 à l'intérieur de la paroi 15a et 15b est réalisée par des moyens connus appropriés.

Bien entendu le disque 5 est percé en partie centrale d'une ouverture similaire à l'ouverture 150, pour permettre le passage du brûleur.

On notera (voir figure 1) que le disque 6 n'est pas appliqué directement contre la paroi arrière 15b. Au contraire, il est maintenu écarté de cette dernière au moyen d'entretoises 61.

Le faisceau 31 est composé d'un certain nombre d'éléments tubulaires hélicoïdaux identiques à ceux qui composent le faisceau 21.

A titre indicatif, chaque élément est constitué par un tube de section droite aplatie et ovale enroulée sur quatre spires. L'enroulement à un diamètre intérieur de 185 mm, un diamètre extérieur de 235 mm ; l'épaisseur de la section aplatie du tube est de 7,2 mm, et l'interstice séparant deux spires est de 0,8 mm.

Chaque élément a donc une dimension axiale de 32 mm.

Dans l'exemple illustré, le faisceau primaire 21 est constitué d'une juxtaposition de dix éléments.

Selon une caractéristique essentielle de l'invention, le nombre d'éléments composant le faisceau secondaire 31 est plus faible. Dans l'exemple illustré il est de six (au lieu de dix).

La longueur **I**_{**1**} du faisceau 21 est donc égale à 320 mm (32 x 10), alors que la longueur **I**_{**2**} du faisceau 31 n'est que de 192 mm (32 x 6), soit une différence de 128 mm.

Dans le mode de réalisation des figures 1 à 4, le faisceau secondaire 31 est appliqué par l'une de ses extrémités contre la façade avant 15a.

En raison de la différence de longueur **I**_{**1**} **- I**_{**2**}**,** il est donc ménagé un espace libre entre l'autre extrémité du faisceau 31 et la façade arrière 15b.

Dans cet espace est montée une enceinte constituée par un manchon cylindrique 9, centré sur l'axe **X**_{**2**}**X'**_{**2**}, qui est fixée par l'un de ses bords d'extrémité à la façade arrière 15b, par exemple par soudage. Son autre extrémité présente une collerette annulaire plane 90, qui s'étend perpendiculairement à l'axe **X**_{**2**}**X'**_{**2**}.

Cette collerette sert d'appui à l'autre extrémité du faisceau secondaire 31. L'appareil comporte une manchette 7 pour l'évacuation des gaz brûlés et refroidis.

Il s'agit également d'un manchon tubulaire cylindrique, d'axe vertical **ZZ'**, qui se raccorde au manchon 9, auquel il est fixé et avec l'intérieur duquel il communique.

La manchette 7 est destinée à être connectée à un conduit d'évacuation des gaz brûlés et des fumées, par exemple à un conduit de cheminée non représenté.

Dans les modes de réalisation illustrés, les éléments constitutifs de chacun des faisceaux primaire 21 et secondaire 31 sont branchés en parallèle.

Cependant, on ne sortirait pas du cadre de la présente invention en prévoyant un montage en série de certains ou de la totalité des éléments, ceci pour chaque faisceau.

Les portions d'extrémité de chaque élément sont conformées et orientées de la manière illustrée sur les figures 1 et 24 de la demande internationale précitée.

Chaque extrémité d'enroulement est une portion de tube dont la partie d'embouchure est cylindrique, la transition de cette embouchure avec le reste du tube, de section aplatie, se faisant de manière progressive (forme en « sifflet»).

Les axes de ces deux extrémités (dirigées vers l'extérieur) se trouvent dans un même plan qui est tangent à l'enroulement hélicoïdal.

Ce plan ici est horizontal.

Les portions d'extrémités 210 et 211 des éléments constitutifs du faisceau primaire (inférieur) sont situées vers le haut, tandis qu'au contraire celles 310, 311 du faisceau secondaire (supérieur) 31 sont situées vers le bas.

Cette disposition tête bêche est agencée de telle manière que les embouchures d'entrée de l'un des faisceaux se trouvent proches des embouchures de sortie de l'autre faisceau, et réciproquement.

Chaque élément d'enroulement tubulaire est retenu à l'intérieur de l'enveloppe du fait de l'engagement de ses parties d'embouchure cylindrique dans des trous circulaires appropriés ménagés dans les parois latérales verticales planes 140, 141 de l'enveloppe.

Des moyens d'étanchéité appropriés sont prévus à ce niveau.

Des organes additionnels (non représentés) peuvent être avantageusement prévus pour assurer un bon maintien et un bon centrage de chaque élément à l'intérieur de l'enveloppe.

On notera par ailleurs que chacun des tubes plats constitutif d'un enroulement présente, sur l'une de ses grandes faces, une série de bossages (emboutis dans la paroi plate) jouant le rôle d'entretoises, destinées à calibrer précisément la dimension de l'interstice séparant deux spires, selon une disposition expliquée dans la demande internationale WO 94/16272.

On a désigné par les références 212 et 312 les bossages correspondants aux faisceaux 21 et 31 respectivement.

Les portions d'extrémité de chacun des enroulements constitutifs de l'échangeur débouchent dans des collecteurs fixés extérieurement contre la paroi de l'enveloppe 1, et plus précisément contre les parties planes 140, 141, de manière à entourer complètement les ouvertures recevant les parties d'extrémités des enroulements.

Contre la face 140 est fixée un collecteur dit « d'entrée et sortie » référencé 100, tandis que sur la face opposée 141 est fixé un collecteur 11 dit « de transfert ».

Dans les deux cas, il s'agit de boîtiers allongés, de forme générale parallélépipédique rectangle, présentant les ouvertures nécessaires. Ils sont fixés à l'enveloppe 1, par exemple au moyen d'un ensemble de vis référencés 101 sur la figure 2 ou directement par soudure. Bien entendu il est prévu une étanchéité à ce niveau.

Le collecteur 100 est subdivisé intérieurement par une cloison horizontale 13.

La partie du collecteur 100 située au dessus de la cloison 13 présente une tubulure de raccordement 12 destinée à être connectée à un conduit d'amenée de l'eau froide que l'on doit réchauffer; de plus, cette partie est connectée à l'ensemble des extrémités d'entrée du faisceau secondaire 31.

Inversement, la partie inférieure du collecteur 100, qui correspond à l'espace situé sous la cloison 13, présente une tubulure 10 de raccordement à un conduit de sortie de l'eau chaude ; cette partie est connectée à l'ensemble des extrémités de sortie des éléments constitutifs du faisceau primaire 21.

Le collecteur opposé 11 n'est pas cloisonné. Il assure la connexion entre les extrémités de sortie du faisceau secondaire 31 et les extrémités d'entrée du faisceau primaire 21.

A l'intérieur de l'enveloppe, entre les deux échangeurs est montée une goulotte 8 qui est fixée à la façade avant 15a. Il s'agit d'une plaque légèrement incurvée, dont la concavité est dirigée vers le haut, et qui est inclinée vers le bas et vers l'arrière (voir figure 1).

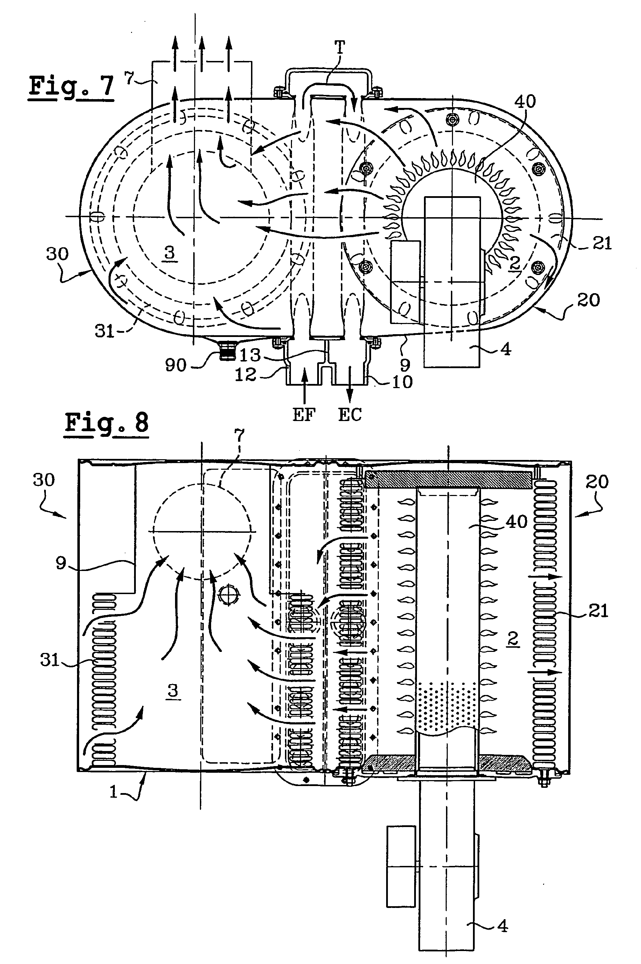

Comme on le voit sur la figure 8, cette goulotte occupe seulement la zone centrale de l'enveloppe, mais ne contrarie pas le passage des gaz brûlés par les côtés, comme on le verra plus loin.

L'extrémité libre arrière de la plaque 8 est recourbée vers le bas par un rebord plus incliné 80 qui surplombe l'espace mentionné plus haut séparant le disque isolant 6 de la paroi arrière 15b (voir figure 1).

Pour permettre le montage de l'appareil, la partie 14 de l'enveloppe 1 est composée de deux demi coquilles susceptibles d'être assemblées l'une à l'autre, par exemple par soudage, selon un plan de joint correspondant au plan vertical **V**.

Ceci permet l'emboîtement des deux demi coquilles sur les deux faisceaux préalablement convenablement positionnés entre elles.

Avant assemblage final, on fixe sur la face interne de la façade avant 15a le disque isolant annulaire 5 et la goulotte 8. Sur la face interne de l'autre façade 15b on fixe le disque isolant 6 ainsi que le manchon 9 avec sa manchette 7 (avec laquelle il a été préalablement solidarisé).

En partie haute, les deux demi coquilles constitutives de la partie 14 de l'enveloppe présentent une ouverture semi circulaire, qui vient entourer cette manchette 7 au moment de leur rapprochement, la façade 15b ayant déjà été convenablement positionnée. Puis, après mise en place de la façade 15a, on procède au soudage de l'ensemble, y compris sur le pourtour de la manchette 7 au niveau de l'enveloppe 14, afin de réaliser une étanchéité à ce niveau.

Enfin, le brûleur est naturellement équipé d'un dispositif d'allumage approprié, par exemple d'une électrode, située tout près de la surface de combustion. Il s'agit là d'un dispositif connu qui n'a pas été représenté sur les dessins afin de ne pas les alourdir inutilement.

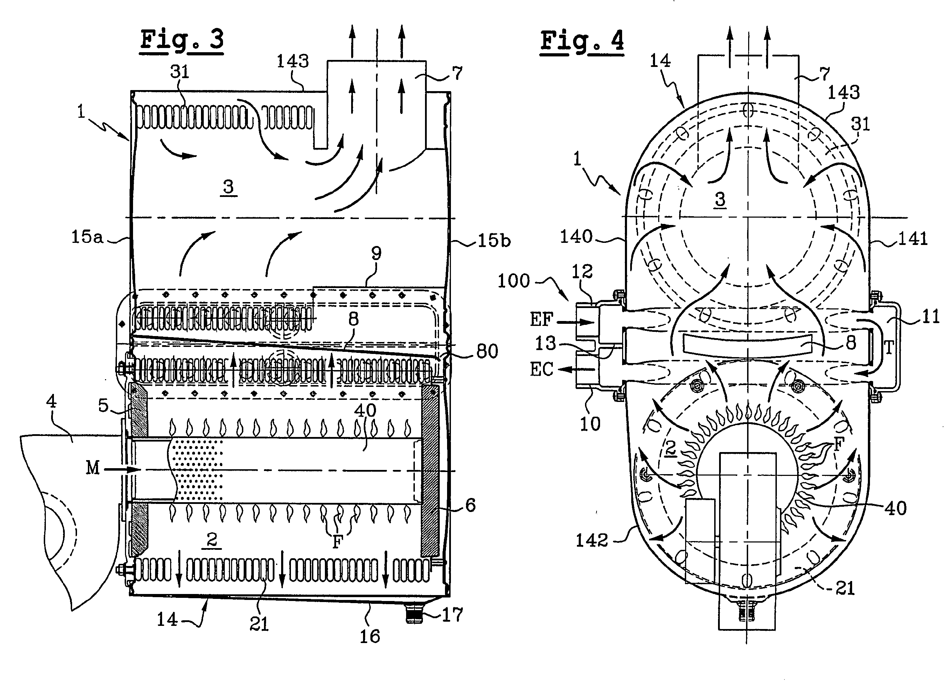

Le fonctionnement de cet appareil va maintenant être expliqué en référence aux figures 3 et 4.

Le ventilateur 4 ayant été mis en marche, il amène un mélange gazeux combustible à l'intérieur du brûleur tubulaire 40. Ce mélange ressort de la paroi du brûleur par les petits orifices qui en traversent la paroi. Le brûleur étant allumé, il se produit une combustion qui génère des flammes F sur toute la surface du brûleur.

Dans le même temps, l'eau à réchauffer a été mise en circulation. L'eau froide, désignée **EF** sur la figure 4, arrive dans l'appareil par la tubulure 12, se répand dans la partie supérieure du collecteur 100, et pénètre dans l'ensemble des extrémités d'entrée du faisceau supérieur 31. Elle ressort de ce dernier par les extrémités de sortie pour pénétrer dans le collecteur 11 où elle transite, comme symbolisé par la flèche **T**, pour ensuite se répartir dans les extrémités d'entrée du faisceau inférieur 21 et circuler dans celui-ci. Enfin, l'eau réchauffée ressort par l'ensemble des extrémités de sortie de ce faisceau, arrive dans la partie inférieure du collecteur 100 et en ressort par la tubulure 10, comme symbolisé par la flèche EC.

Les gaz brûlants générés dans l'espace 2 par les flammes **F** sont chassés vers l'extérieur du faisceau primaire 21. Ils traversent radialement les interstices séparant les tubes plats qui le composent, réalisant par échange thermique un chauffage élevé de l'eau qui les parcourt intérieurement, et qui - comme on le verra plus loin ― a déjà été réchauffée préalablement au cours de son parcours dans l'échangeur secondaire 31.

Au sortir du faisceau primaire, les gaz brûlés sont considérablement refroidis par suite de cet échange thermique. Ils se trouvent néanmoins à une température nettement plus élevée que celle de l'eau (à température ambiante) qui arrive dans l'appareil.

A titre indicatif leur température est de l'ordre de 100 à 150°C.

Ces gaz chauds sont canalisés vers le haut, en suivant la paroi interne de l'enveloppe. Ils passent sur les côtés de la goulotte 8, et traversent le faisceau secondaire 31, cette fois de l'extérieur vers l'intérieur, toujours en passant entre les spires de tube aplati. Au cours de ce passage, i1 se produit une condensation au moins partielle de la vapeur d'eau présente dans les gaz brûlés, du fait que les parois des tubes du faisceau secondaire - parcourus par de l'eau froide, ou simplement tiédie - se trouvent à une température inférieure au point de rosée des produits de combustion. En plus du transfert normal de calories, par suite de la différence de température entre les gaz et l'eau qui circulent dans le faisceau secondaire, on observe ici un transfert supplémentaire de calories résultant de la transmission de la chaleur latente de vaporisation liée au phénomène de condensation, changement de phase exothermique.

On obtient ainsi un préchauffage de l'eau qui circule dans le faisceau secondaire avant qu'elle n'atteigne le faisceau primaire.

Les gaz brûlés, notablement refroidis, se retrouvent dans l'espace 3 intérieur à l'échangeur secondaire puis s'échappent via l'enceinte 9 dans le conduit d'évacuation 7.

Les condensats liquides, qui s'écoulent des tubes du faisceau secondaire 31 tombent par gravité dans la goulotte 8, de sorte qu'ils ne perturbent pas le fonctionnement du brûleur. Etant donnée la pente de cette goulotte, ils sont dirigés à l'extrémité arrière de celle-ci, suivent le rebord recourbé 80 et retombent derrière la plaque isolante 6 dans le fond incliné 16 de l'enveloppe. En suivant ce fond incliné, elles atteignent la bouche d'évacuation des condensats 17, laquelle est reliée à un conduit d'évacuation approprié, non représenté.

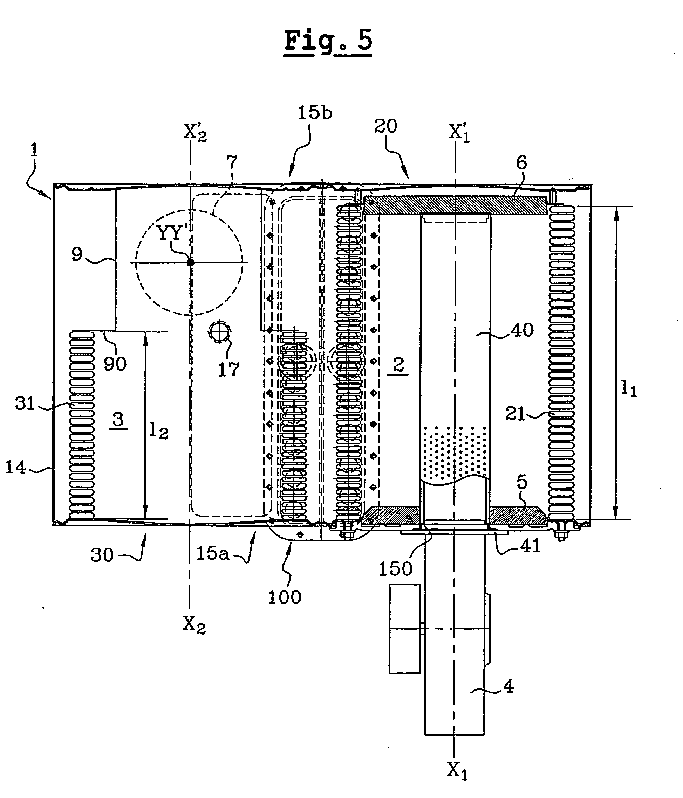

Le second mode de réalisation, qui est représenté sur les figures 5 à 7 est tout à fait analogue à celui qui vient d'être décrit. C'est pourquoi les mêmes références ont été utilisées pour désigner les éléments similaires ou identiques.

On y retrouve la même organisation que dans le premier mode de réalisation, excepté les deux points suivants :

Premièrement, l'appareil a une disposition générale horizontale, et non verticale. En effet, les deux faisceaux sont cette fois placés non pas l'un au dessus de l'autre, mais côte à côte, et leurs axes **X**_{**1**}**X'**_{**1**} et **X**_{**2**}**X'**_{**2**} se trouvent dans un même plan horizontal **H**.

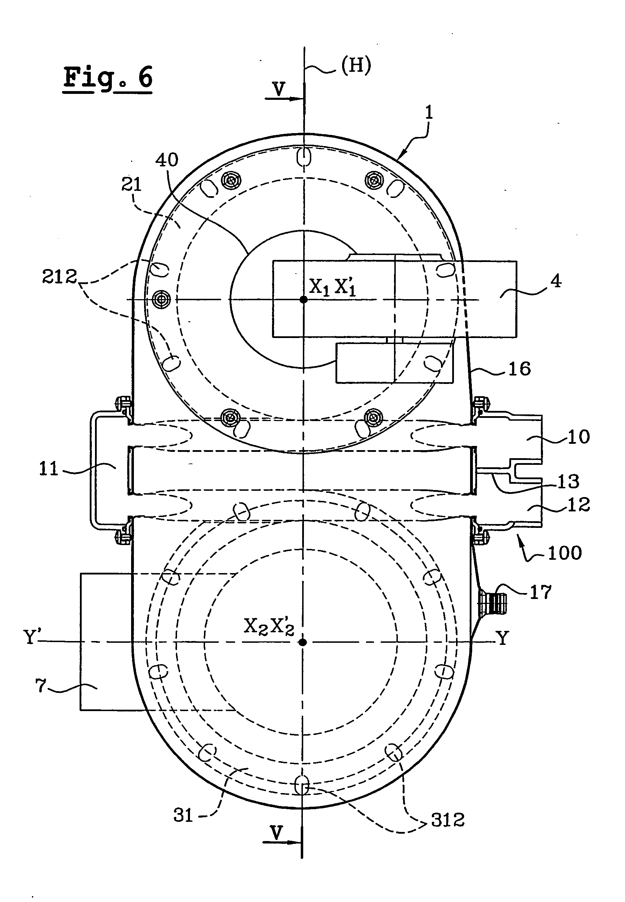

Dans l'exemple illustré, le collecteur de transfert 11 est situé en haut tandis que le collecteur d'entrée - sortie 100 est tourné vers le bas (voir figure 6).

Une position inverse serait naturellement possible.

La manchette d'évacuation des gaz brûlés reste dirigée vers le haut.

Deuxièmement, l'axe (vertical) **YY'** de cette manchette 7 est perpendiculaire au plan qui contient les axes des deux faisceaux (et non plus contenu dans ce plan).

Dans cette forme de réalisation, il n'est pas utile de recourir à une goulotte de récupération des condensats, puisque le faisceau secondaire, sur lequel ils se forment, est décalé latéralement, et non plus situé à l'aplomb du faisceau primaire et du brûleur. Le fond de l'enveloppe 16 ici aussi est incliné, et les condensats retombent directement sur ce fond pour s'échapper par le raccord d'évacuation 17.

Les figures 7 et 8 montrent la circulation des gaz dans l'appareil. Elle est similaire à celle du premier mode de réalisation, excepté que le flux de gaz brûlés quittant le faisceau primaire pour atteindre le faisceau secondaire se déplace à peu près horizontalement, et non plus verticalement à l'intérieur de l'enveloppe.

Dans chacun des deux modes de réalisation qui vient d'être décrit, les éléments tubulaires constituant les deux faisceaux sont identiques. Ceci n'est pas obligatoire, les enroulements pouvant être différents notamment leur diamètre.

Par ailleurs, l'espace libre recevant la pièce 9 et la manchette 7 est situé entre le faisceau secondaire et la façade arrière.

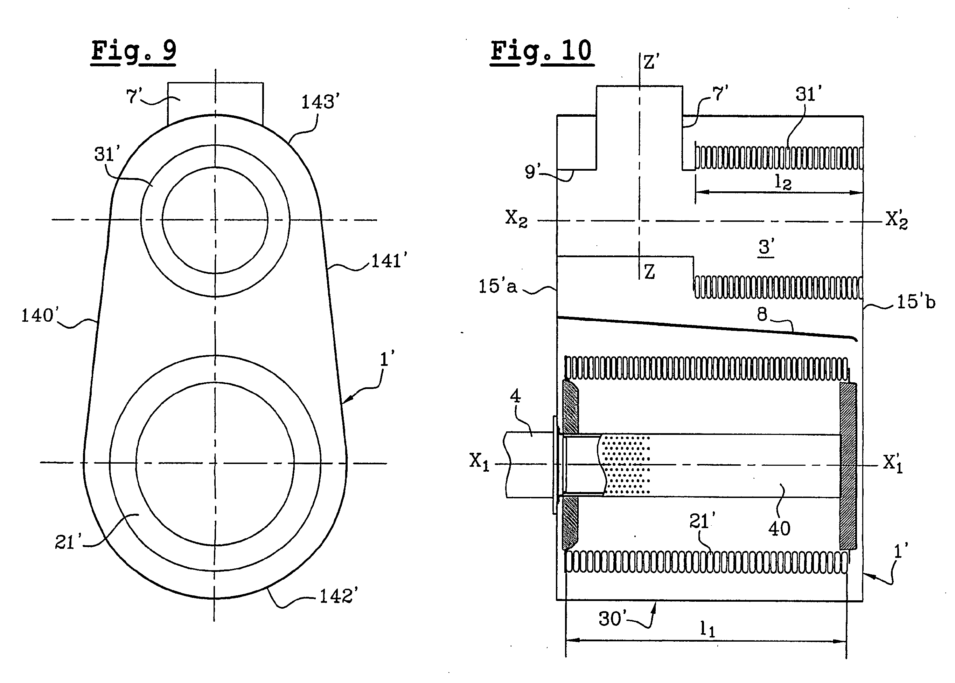

Ces dispositions ne sont pas non plus obligatoires, comme cela est illustré dans la variante des figures 9 et 10.

Sur cette figure, on a utilisé les mêmes références que dans les formes de réalisation précédentes pour les éléments similaires mais non identiques, en leur affectant l'indice « prime ».

Ainsi, sur ces figures, on remarque que le diamètre du faisceau primaire 21' est supérieur à celui du faisceau secondaire 31'.

La forme de l'enveloppe entourant les deux faisceaux s'en trouve modifiée. Les faces latérales 140' et 141' ne sont plus parallèles, mais inclinées de manière à converger légèrement vers le haut.

L'enceinte 9' et la manchette 7' se trouvent cette fois interposées entre la façade avant 15'A et le faisceau secondaire 31'.

Bien entendu, on ne sortirait pas du cadre de l'invention en prévoyant un « panachage » de l'un ou l'autre des deux premiers modes de réalisation avec la variante des figures 9 et 10, qui consisterait :
- soit à installer dans l'appareil du premier ou du second mode de réalisation des faisceaux primaire et secondaire de diamètres différents (sans déplacer l'enceinte et la manchette) ;
- soit déplacer la manchette dans une disposition similaire à celle de la figure 10, (tout en conservant des diamètres identiques pour les deux faisceaux).

Un appareil conforme à l'invention est très compact et léger, tout en étant extrêmement performant sur le plan du rendement.

Bien que remarquablement adapté à un usage domestique, pour chauffer de l'eau, il peut trouver application dans d'autres domaines, notamment dans l'industrie, pour chauffer divers fluides.

## Revendications

1. Echangeur de chaleur à condensation, associé à un brûleur à gaz ou fioul (40), qui est composé de deux faisceaux parallèles de tubes, l'un (21) appelé « primaire », et l'autre (31) appelé « secondaire », chacun de ces deux faisceaux consistant en un tube, ou un groupe de tubes disposés bout à bout, formant un enroulement en hélice, dans lequel la paroi du (des) tube(s) est réalisée dans un matériau thermiquement bon conducteur et présente une section droite aplatie et ovale, dont le grand axe est perpendiculaire, ou approximativement perpendiculaire, à celui de l'hélice, tandis que la largeur de l'interstice séparant deux spires adjacentes est constante et notablement plus faible que l'épaisseur de ladite section droite, ces deux faisceaux étant disposés à proximité l'un de l'autre et montés fixement à l'intérieur d'une enveloppe (1) imperméable aux gaz, et communiquant l'un avec l'autre par l'intermédiaire d'un collecteur (11) dit « de transfert », des moyens étant prévus pour faire circuler un fluide à réchauffer, en particulier de l'eau froide, tout d'abord à l'intérieur de(s) tube(s) constitutif(s) dudit faisceau secondaire (31), puis - via ledit collecteur de transfert (11) - à l'intérieur de(s) tube(s) constitutif(s) dudit faisceau primaire (21), ladite enveloppe (1) entourant les deux faisceaux de tubes, tout en étant faiblement espacée de chacun d'eux, cette enveloppe (1) présentant une manchette d'évacuation (7) des gaz brûlés qui est positionnée au voisinage dudit faisceau secondaire (31), cet échangeur étant ainsi agencé que les gaz chauds générés par le brûleur (40) traversent radialement, ou approximativement radialement, en passant à travers les interstices séparant leurs spires, tout d'abord ledit faisceau primaire (21), puis ledit faisceau secondaire (31), et sont ensuite évacués hors de l'échangeur à travers ladite manchette (7), **caractérisé par le fait que** :
- ledit brûleur (40) est un brûleur cylindrique, dont le diamètre est sensiblement inférieur à celui dudit faisceau primaire (21), et qui est logé coaxialement à l'intérieur de ce dernier, en s'étendant axialement sur toute, ou pratiquement toute, sa longueur ;
- la dimension axiale **(I**_{**2**}**)** dudit faisceau secondaire (31) est sensiblement inférieure à celle **(I**_{**1**}**)** dudit faisceau primaire (21), de sorte qu'est ménagé un espace disponible en regard d'une portion d'extrémité du faisceau primaire, dans le prolongement du faisceau secondaire de plus petite longueur ;
- cet espace disponible est occupé par une enceinte (9) qui communique avec l'espace intérieur (3) du faisceau secondaire ;
- ladite manchette (7) est raccordée à la paroi de ladite enceinte (9) de manière à communiquer avec elle, et est orientée transversalement par rapport à l'axe **(X**_{**2**}**X'**_{**2**}**)** du faisceau secondaire (31), de sorte que son encombrement en direction axiale s'inscrit dans celui de l'enceinte (9).

2. Echangeur selon la revendication 1, **caractérisé par le fait que** les tubes constitutifs de chaque faisceau (21, 31) possèdent chacun des portions d'extrémité (210-211, 310-311) rectilignes, les axes de ces deux portions d'extrémité étant situées dans un plan commun qui est tangent à l'hélice formée par le faisceau, leurs ouvertures étant tournées vers l'extérieur de l'échangeur, de chaque côté de celui-ci, que les portions d'extrémité du faisceau primaire sont situées à proximité du faisceau secondaire, et réciproquement, lesdites portions d'extrémité présentant des embouchures cylindriques traversant fixement et de manière étanche la paroi de l'enveloppe (1) et pénétrant, sur un côté de celle-ci, dans un collecteur (100) dit « d'entrée-sortie » cloisonné, apte à être raccordé à un conduit d'amenée du fluide à réchauffer et à un conduit d'évacuation du fluide réchauffé, et sur son autre côté, dans ledit collecteur de transfert (11).

3. Echangeur selon la revendication 1 ou 2, **caractérisé par le fait que** la dite enveloppe (1) comprend, d'une part, un tronçon de tube (14) à fine paroi, de section droite constante, le contour de cette section, approximativement ovale, étant composé de deux parties d'extrémité en forme de demi-cercle reliées par des segments rectilignes latéraux et, d'autre part, une paire de plaques de fermeture, ou « façades » (15a, 15b), dont les contours correspondent à celui de ladite section, et qui s'étendent perpendiculairement à l'axe dudit tronçon de tube, et en obturent chacune l'une des deux embouchures, chaque portion semi cylindrique (142, 143) dudit tronçon de tube (14) entourant coaxialement et partiellement (sur un demi-tour) l'un desdits faisceaux (12, 31).

4. Echangeur selon la revendication 3, **caractérisé par le fait que** l'une (15a) desdites façades, désignée « façade avant », présente une ouverture (150) apte à recevoir une porte (41) supportant ledit brûleur (40) tout en en autorisant le démontage.

5. Echangeur selon la revendication 4, **caractérisé par le fait que** ladite porte (41) est apte à supporter également, du côté extérieur, un ventilateur (4), ou une simple manchette, permettant d'alimenter le brûleur en mélange gazeux combustible.

6. Echangeur selon l'une des revendications 3 à 5, **caractérisé par le fait que** qu'en vis-à-vis de l'espace (2) intérieur audit faisceau primaire (21), chacune des deux façades (15a, 15b) est munie d'un disque thermiquement isolant (5,6).

7. Echangeur selon l'une des revendications 1 à 6, **caractérisé par le fait que** les deux faisceaux ont le même diamètre.

8. Echangeur selon l'une des revendications 1 à 7, **caractérisé par le fait que** les deux faisceaux (21, 31) ont des axes **(X**_{**1**}**X'**_{**1**}**, X**_{**2**}**X'**_{**2**}**)** horizontaux et parallèles.

9. Echangeur selon la revendication 8, **caractérisé par le fait que** les deux faisceaux (21, 31) sont placés au dessus l'un de l'autre, leurs axes **(X**_{**1**}**X'**_{**1**}**, X**_{**2**}**X'**_{**2**}**)** étant situés dans un même plan vertical **(V)**.

10. Echangeur selon la revendication 9, **caractérisé par le fait que** le faisceau secondaire (31) est placé au-dessus du faisceau primaire (21), des moyens tels qu'une goulotte inclinée (8) intercalée entre les deux faisceaux étant prévus pour empêcher que les condensats susceptibles de se former sur le faisceau secondaire (31) ne retombent sur le faisceau primaire (21) et/ou sur le brûleur (40).

11. Echangeur selon la revendication 8, **caractérisé par le fait que** les deux faisceaux (21, 31)sont placés l'un à côté de l'autre, leurs axes **(X**_{**1**}**X'**_{**1**}**, X**_{**2**}**X'**_{**2**}**)** étant situés dans un même plan horizontal **(H)**.

12. Echangeur selon l'une des revendications 1 à 11, **caractérisé par le fait que** l'axe **(ZZ')** de ladite manchette d'évacuation est compris dans le plan contenant les axes **(X**_{**1**}**X'**_{**1**}**, X**_{**2**}**X'**_{**2**}**)** des deux faisceaux.

13. Echangeur selon l'une des revendications 1 à 11, **caractérisé par le fait que** l'axe **(YY')** de ladite manchette d'évacuation (7) est perpendiculaire au plan contenant les axes **(X**_{**1**}**X'**_{**1**}**, X**_{**2**}**X'**_{**2**}**)** des deux faisceaux.

14. Echangeur selon l'une des revendications 1 à 13, **caractérisé par le fait que** la paroi de ladite enceinte (9) est un manchon tubulaire cylindrique, coaxial au faisceau secondaire (31), dont l'un des bords d'extrémité est fixé contre l'enveloppe (15b) de l'échangeur, tandis que son autre bord d'extrémité est muni d'une collerette annulaire (90) contre laquelle prend appui le faisceau secondaire (31), ladite manchette d'évacuation (7), également de forme cylindrique, se raccordant audit manchon (9), perpendiculairement à son axe **(X**_{**2**}**X'**_{**2**}**)**.

15. Echangeur selon l'une des revendications 1 à 11, **caractérisé par le fait que** son enveloppe (1) possède un fond incliné (16) doté d'un raccord de sortie (17), adapté pour collecter et évacuer les condensats susceptibles de se-former sur le faisceau secondaire (31).

## Claims

1. Condensation heat exchanger, associated with a gas or fuel oil burner (40), which is composed of two parallel tube bundles, one (21) termed "primary" and the other (31) termed "secondary", each of these two bundles consisting of a tube, or a group of tubes disposed end to end, forming a helical coil, in which the wall of the tube(s) being made of a good thermal conductor and having a flattened and oval cross section with the major axis perpendicular, or approximately perpendicular, to that of the helix, while the width of the interstice separating two adjacent turns is constant and markedly smaller than the thickness of the said cross section, these two bundles being disposed close together and fixedly mounted within an envelope (1) which is impermeable to the gases, and communicating one with another via a collector (11) termed "transfer", means being provided to cause circulation of a fluid to be heated, in particular liquid water, firstly within tube(s) constituting the said secondary bundle (31), then - via the said transfer collector (11) - to the interior of the tube(s) constituting the said primary bundle (21), the said envelope (1) surrounding the two tube bundles while being closely spaced from each of them, this envelope (1) having a discharge cuff (7) for burnt gases, positioned in the neighbourhood of the said secondary bundle (31), this exchanger being formed so that the hot gases generated by the burner (40) pass radially, or approximately radially, passing through the interstices separating their turns, firstly through the primary bundle (21) and then the said secondary bundle (31), and are then discharged from the exchanger through the said cuff (7), **characterised in that**:
- the said burner (40) is a cylindrical burner whose diameter is substantially less than that of the primary bundle (21), and which is mounted coaxially within the latter, extending axially over all, or practically all, of its length;
- the axial dimension (I₂) of the said secondary bundle (31) is substantially smaller than that (I₁) of the said primary bundle (21), so that an available space is formed facing an end portion of the primary bundle, in the prolongation of the shorter secondary bundle;
- this available space is occupied by an enclosure (9) which communicates with the internal space (3) of the secondary bundle;
- the said cuff (7) is connected to the wall of the said enclosure (9) so as to communicate with it, and is oriented transversely with respect to the axis (X₂X'₂) of the secondary bundle (31), so that its bulk in the axial direction fits into that of the enclosure (9).

2. Exchanger according to claim 1, **characterised in that** the tubes constituting each bundle (21, 31) each have rectilinear end portions (210-211, 310-311) the axes of these two end portions being located in a common plane which is tangent to the helix formed by the bundle, the openings being turned towards the outside of the exchanger from each side of the latter; that the end portions of the primary bundle are situated close to the secondary bundle, and vice versa, the said end portions having cylindrical openings passing fixedly and sealingly through the wall of the envelope (1) and penetrating, on one side of the latter, into a walled collector (100) termed "inlet-outlet", capable of being connected to a supply duct for fluid to be heated and to a discharge duct for heated fluid, and on its other side, into the said transfer collector (11).

3. Exchanger according to claim 1 or 2, **characterised in that** the said envelope (1) comprises on the one hand a thin-walled tube length (14), of constant cross section, the approximately oval contour of this cross section being composed of two end portions of semicircular form connected by lateral rectilinear segments, and on the other hand a pair of closure plates, or "facades" (15a, 15b), the contours of which correspond to that of the said cross section and which extend perpendicularly of the axis of the said tube length, and each blocking one of the two openings, each semicylindrical portion (142, 143) of the said tube length (14) coaxially and partially surrounding (over a half-turn) one of the said bundles (21, 31).

4. Exchanger according to claim 3, **characterised in that** one (15a) of the said facades, denoted as "front façade", has an opening (150) capable of receiving a door (41) supporting the said burner (40) while enabling it to be demounted.

5. Exchanger according to claim 4, **characterised in that** the said door (41) is also suitable to support, on its outer side, a fan (4), or a simple cuff, enabling supplying the burner with a combustible gas mixture.

6. Exchanger according to one of claims 3-5, **characterised in that** each of the two facades (15a, 15b) is furnished with a thermally insulating disc (5, 6) facing the internal space (2) of the said primary bundle (21).

7. Exchanger according to one of claims 1-6, **characterised in that** the two bundles have the same diameter.

8. Exchanger according to one of claims 1-7, **characterised in that** the two bundles (21, 31) have their axes (X₁X'₁, X₂X'₂) horizontal and parallel.

9. Exchanger according to claim 8, **characterised in that** the two bundles (21, 31) are placed one above the other, their axes (X₁X'₁, X₂X'₂) being located in the same vertical plane (V).

10. Exchanger according to claim 9, **characterised in that** the secondary bundle (31) is placed above the primary bundle (21), means such as an inclined trough (8) intercalated between the two bundles being provided for preventing condensates which may form on the secondary bundle (31) do not fall onto the primary bundle (21) or the burner (40).

11. Exchanger according to claim 8, **characterised in that** the two bundles (21, 31) are placed one beside the other, their axes (X₁X'₁, X₂X'₂) being situated in the same horizontal plane (H).

12. Exchanger according to one of claims 1-11, **characterized in that** the axis (ZZ') of the said discharge cuff (7) is comprised in the plane containing the axes (X₁X'₁, X₂X'₂) of the two bundles.

13. Exchanger according to one of claims 1-11, **characterised in that** the axis (YY') of the said discharge cuff (7) is perpendicular to the plane containing the axes (X₁X'₁, X₂X'₂) of the two bundles.

14. Exchanger according to one of claims 1-13, **characterised in that** the wall of the said enclosure (9) is a cylindrical tube length coaxial with the secondary bundle (31), of which one of the end edges is fixed against the envelope (15b) of the exchanger, while its other end edge is furnished with an annular flange (90) against which the secondary bundle (31) is supported, the 5 said discharge cuff (7), also of cylindrical shape, connecting to the said tube length (9), perpendicularly to its axis (X₂X'₂).

15. Exchanger according to one of claims 1-11, **characterised in that** its envelope (1) has an inclined bottom (16) provided with an outlet connection (17), suitable for collecting and discharging condensates which may form on the secondary bundle (31).

## Patentansprüche

1. Kondensationswärmetauscher in Verbindung mit einem Gas- oder Heizölbrenner (40), der aus zwei parallelen Bündeln von Röhren zusammengesetzt ist, wovon das eine (21) "primär" und das andere (31) "sekundär" genannt wird, wobei jedes dieser beiden Bündel aus einer Röhre oder einer Gruppe von mit den Enden aneinandergefügten Röhren besteht, die eine Schraubenwicklung bilden, bei der die Wand der einen oder mehreren Röhren aus einem thermisch gut leitenden Material realisiert ist und einen abgeflachten und ovalen Querschnitt hat, dessen große Achse senkrecht oder in etwa senkrecht zu derjenigen der Schraube ist, wobei die Breite der Lücke, die zwei benachbarte Windungen trennt, konstant und merklich kleiner als die Dicke des Querschnitts ist, wobei diese zwei Bündel nahe beieinander angeordnet und im Inneren eines gasundurchlässigen Mantels (1) fest angebracht sind und wobei sie über einen Sammler (11), der "Übertragungssammler" genannt wird, miteinander kommunizierend in Verbindung stehen, wobei Mittel vorgesehen sind, um ein aufzuwärmendes Fluid, insbesondere kaltes Wasser, zirkulieren zu lassen, und zwar zuerst im Inneren der das Sekundärbündel (31) bildenden Röhre(n), dann - über den Übertragungssammler (11) - im Inneren der das Primärbündel (21) bildenden Röhre(n), wobei der Mantel (1) die beiden Röhrenbündel umgibt und gleichzeitig von jedem von ihnen einen geringen Abstand hat, wobei dieser Mantel (1) eine Manschette (7) zum Abführen der verbrannten Gase hat, die in der Nähe des Sekundärbündels (31) angeordnet ist, wobei dieser Wärmetauscher somit dafür eingerichtet ist, daß die vom Brenner (40) erzeugten heißen Gase zuerst das Primärbündel (21) und dann das Sekundärbündel (31) radial oder in etwa radial durchlaufen, wobei sie durch die Lücken, die deren Windungen trennen, strömen und anschließend durch die Manschette (7) aus dem Wärmetauscher abgeführt werden, **dadurch gekennzeichnet, daß**:
- der Brenner (40) ein zylindrischer Brenner ist, dessen Durchmesser deutlich kleiner ist als derjenige des Primärbündels (21) und der koaxial im Inneren von letzterem aufgenommen ist, wobei er sich axial über dessen ganze oder praktisch dessen ganze Länge erstreckt;
- die axiale Abmessung (I₂) des Sekundärbündels (31) deutlich kleiner als diejenige (I₁) des Primärbündels (21) ist, derart, daß einem Endabschnitt des Primärbündels gegenüberliegend und in Verlängerung des Sekundärbündels mit der kleineren Länge ein verfügbarer Raum eingerichtet ist;
- dieser verfügbare Raum von einer Einfassung (9) eingenommen wird, die mit dem Innenraum (3) des Sekundärbündels kommunizierend verbunden ist;
- die Manschette (7) mit der Wand der Einfassung (9) so verbunden ist, daß sie mit dieser kommuniziert, und sie quer zur Achse (X₂X'₂) des Sekundärbündels (31) ausgerichtet ist, derart, daß ihr Platzbedarf in axialer Richtung in demjenigen der Einfassung (9) enthalten ist.

2. Wärmetauscher nach Anspruch 1, **dadurch gekennzeichnet, daß** die jedes der Bündel (21, 31) bildenden Röhren jeweils geradlinige Endabschnitte (210-211, 310-311) haben, wobei die Achsen dieser beiden Endabschnitte in einer gemeinsamen Ebene angeordnet sind, die tangential zu der vom Bündel gebildeten Schraube ist, wobei die Öffnungen in Richtung des Äußeren des Wärmetauschers gerichtet sind, an jeder Seite von diesem, und daß die Endabschnitte des Primärbündels in der Nähe des Sekundärbündels angeordnet sind und umgekehrt, wobei die Endabschnitte zylindrische Mündungen haben, die fest und auf dichte Weise die Wand des Mantels (1) durchstoßen und die auf einer Seite von diesem in einen abgetrennten Sammler (100) führen, der "Eingangs-Ausgangs-" Sammler genannt wird und der dafür eingerichtet ist, an eine Zuführungsleitung für das aufzuwärmende Fluid und an eine Abflußleitung für das aufgewärmte Fluid angeschlossen zu werden, und die auf seiner anderen Seite in den Übertragungssammler (11) führen.

3. Wärmetauscher nach Anspruch 1 oder 2, **dadurch gekennzeichnet, daß** der Mantel (1) zum einen einen dünnwandigen Röhrenabschnitt (14) mit konstantem Querschnitt umfaßt, wobei der in etwa ovale Umriß dieses Querschnitts aus zwei halbkreisförmigen Endabschnitten zusammengesetzt ist, die durch seitliche geradlinige Segmente verbunden sind, und zum anderen ein Paar Verschlußplatten oder "Frontseiten" (15a, 15b) umfaßt, deren Umrisse demjenigen des genannten Querschnitts entsprechen und die sich senkrecht zur Achse des Röhrenabschnitts erstrecken, wobei jeder halbzylindrische Abschnitt (142, 142) des Röhrenabschnitts (14) koaxial und teilweise (über eine halbe Windung) eines der Bündel (12, 31) umgibt, wobei jeder eine der beiden Mündungen verschließt.

4. Wärmetauscher nach Anspruch 3, **dadurch gekennzeichnet, daß** eine (15a) der beiden Frontseiten, die als "vordere Frontseite" bezeichnet wird, eine Öffnung (150) hat, die dafür eingerichtet ist, eine Türe (41) aufzunehmen, die den Brenner (40) trägt und gleichzeitig dessen Ausbau gestattet.

5. Wärmetauscher nach Anspruch 4, **dadurch gekennzeichnet, daß** die Türe (41) dafür eingerichtet ist, auf ihrer Außenseite auch einen Ventilator (4) oder eine einfache Manschette zu tragen, der oder die es gestattet, den Brenner mit einem brennbaren Gasgemisch zu versorgen.

6. Wärmetauscher nach einem der Ansprüche 3 bis 5, **dadurch gekennzeichnet, daß**, dem Raum (2) innerhalb des Primärbündels (21) gegenüberliegend, jede der beiden Frontseiten (15a, 15b) mit einer thermisch isolierenden Scheibe (5, 6) ausgestattet ist.

7. Wärmetauscher nach einem der Ansprüche 1 bis 6, **dadurch gekennzeichnet, daß** die beiden Bündel denselben Durchmesser haben.

8. Wärmetauscher nach einem der Ansprüche 1 bis 7, **dadurch gekennzeichnet, daß** die beiden Bündel (21, 31) horizontale und parallele Achsen (X₁X'₁, X₂X'₂) haben.

9. Wärmetauscher nach Anspruch 8, **dadurch gekennzeichnet, daß** die beiden Bündel (21, 31) übereinander angeordnet sind, wobei ihre Achsen (X₁X'₁, X₂X'₂) in ein und derselben vertikalen Ebene (V) angeordnet sind.

10. Wärmetauscher nach Anspruch 9, **dadurch gekennzeichnet, daß** das Sekundärbündel (31) über dem Primärbündel (21) angeordnet ist, wobei zwischen den beiden Bündeln eingefügte Mittel wie etwa eine geneigte Rinne (8) vorgesehen sind, um zu verhindern, daß das Kondensat, das sich auf dem Sekundärbündel (31) bilden kann, nicht auf das Primärbündel (21) und/oder auf den Brenner (40) zurückfällt.

11. Wärmetauscher nach Anspruch 8, **dadurch gekennzeichnet, daß** die beiden Bündel (21, 31) nebeneinander angeordnet sind, wobei ihre Achsen (X₁X'₁, X₂X'₂) in ein und derselben horizontalen Ebene (H) angeordnet sind.

12. Wärmetauscher nach einem der Ansprüche 1 bis 11, **dadurch gekennzeichnet, daß** die Achse (ZZ') der Manschette zum Abführen in der Ebene liegt, die die Achsen (X₁X'₁, X₂X'₂) der beiden Bündel enthält.

13. Wärmetauscher nach einem der Ansprüche 1 bis 11, **dadurch gekennzeichnet, daß** die Achse (YY') der Manschette zum Abführen (7) senkrecht zur Ebene steht, die die Achsen (X₁X'₁, X₂X'₂) der beiden Bündel enthält.

14. Wärmetauscher nach einem der Ansprüche 1 bis 13, **dadurch gekennzeichnet, daß** die Wand der Einfassung (9) eine zylindrische röhrenförmige Hülse ist, die koaxial zum Sekundärbündel (31) ist und von der einer der Endränder am Mantel (15b) des Wärmetauschers befestigt ist, wohingegen ihr anderer Endrand mit einem ringförmigen Kragen (90) ausgestattet ist, gegen den sich das Sekundärbündel (31) abstützt, wobei die Manschette zum Abführen (7), die ebenfalls eine zylindrische Form hat, an die Hülse (9) senkrecht zu deren Achse (X₂X'₂) angeschlossen ist.

15. Wärmetauscher nach einem der Ansprüche 1 bis 11, **dadurch gekennzeichnet, daß** sein Mantel (1) einen geneigten Boden (16) hat, der mit einem Ausgangsanschluß (17) versehen ist, der dafür eingerichtet ist, das Kondensat zu sammeln und abzuführen, das sich auf dem Sekundärbündel (31) bilden kann.
